# FASCICULE DE BREVET EUROPEEN

(11) **EP 1 945 502 B1**
(45) Date de publication et mention de la délivrance du brevet: **13.05.2009**
(21) Numéro de dépôt: 06831066.3
(22) Date de dépôt: 06.11.2006
(51) Int. Cl.: B64C 23/00, B64C 7/00

(54) **AERONEF COMPORTANT UN CARENAGE CENTRAL AJUSTEUR DE PRESSION VOILURE PAR DÉFORMATIONS GEOMETRIQUES LOCALES**
FLUGZEUG MIT ZENTRALER STROMLINIENVERKLEIDUNG, DIE DEN DRUCK AUF DIE FLÜGELSTRUKTUREN MITTELS LOKALER GEOMETRISCHER VERFORMUNGEN EINSTELLT
AIRCRAFT COMPRISING A CENTRAL FAIRING THAT ADJUSTS THE PRESSURE ON THE WING STRUCTURES BY MEANS OF LOCAL GEOMETRIC DEFORMATIONS

(30) Priorité: 08.11.2005 FR 0511337
(43) Date de publication de la demande: 23.07.2008
(73) Titulaire: AIRBUS France, 31060 Toulouse Cédex (FR)
(72) Inventeur: FOL, Thierry, F-31330 Grenade (FR); JIMENEZ, Philippe, F-31200 Toulouse (FR); NAMER, Arnaud, F-31300 Toulouse (FR)
(74) Mandataire: Petit, Maxime
(86) Numéro de dépôt international: PCT/FR2006/002464
(87) Numéro de publication internationale: WO 2007/054635

(56) Documents cités:
- FR-A- 2 827 029
- US-A- 5 779 189
- US-A1- 2003 066 933

## Description

L'invention est relative à un aéronef et concerne, plus particulièrement, le carénage central qui assure la jonction entre le fuselage et chaque aile de l'aéronef.

Dans le secteur aéronautique, de nombreuses et permanentes recherches sont effectuées pour améliorer les performances des avions dans diverses conditions de vol (vol de croisière, vol de croisière rapide, début de descente, limites d'enveloppes de vol ...).

Par ailleurs, pour diverses raisons qui tiennent, par exemple, à l'augmentation de l'autonomie des avions ou bien à l'augmentation de la charge utile transportée par les avions, il peut être nécessaire de remplacer les moteurs existants des avions par des moteurs de plus grande taille.

Il s'ensuit une dégradation des performances aérodynamiques des avions ainsi remotorisés.

Les constructeurs aéronautiques cherchent ainsi à obtenir de meilleures performances des avions remotorisés sans toutefois remettre en cause la voilure de ces derniers. Le document FR 2827029 décrit un aéronef comprenant les caractéristiques qui figurent dans le préambule de la revendication 1.

A cet effet, la présente invention vise un aéronef comprenant :
- un fuselage,
- deux ailes auxquelles sont fixées des nacelles de moteurs et qui sont raccordées chacune latéralement au fuselage, de part et d'autre de celui-ci, par un carénage central, le carénage central comportant, en correspondance avec chaque aile, deux surfaces opposées raccordées respectivement à l'extrados et à l'intrados de l'aile concernée et qui s'étendent longitudinalement le long du fuselage,
caractérisé en ce qu'au moins une des deux surfaces présente au moins une déformation géométrique locale qui est adaptée à générer des perturbations latérales aérodynamiques du carénage central vers l'aile en vue de contrôler l'écoulement d'air sur l'aile.

En conférant localement à au moins une de ces surfaces une forme géométrique appropriée, le carénage ainsi conformé est apte à agir favorablement sur l'écoulement d'air de la voilure en générant des ondes de pression qui se propagent en direction de l'extrémité libre de l'aile concernée.

Ces ondes de pression permettent de réorganiser à distance le champ de pression sur la voilure.

On notera que le choix des déformations géométriques locales apportées aux surfaces du carénage permet de réduire la traînée aérodynamique de l'aéronef, sans modifier de façon significative sa masse et son coût de fabrication.

Les ondes de pression générées par une ou plusieurs zones déformées de la surface considérée peuvent être, selon la nature de la ou des déformations géométriques, des ondes de détente, de compression ou une combinaison des deux.

La ou les déformations géométriques locales peuvent s'étendre longitudinalement le long du fuselage.

On notera que, dans l'art antérieur, sur le carénage central il n'est pas prévu de mise en forme particulière et, généralement, les surfaces formant l'enveloppe du carénage ont une courbure longitudinale générale très faible et régulière, voire une courbure nulle.

L'invention prévoit au contraire de conférer à au moins une des surfaces du carénage une courbure plus prononcée que dans l'art antérieur sur une ou plusieurs zones de la surface concernée.

Cette courbure est principalement formée suivant une direction longitudinale le long du fùselage (courbure principale) et, de façon secondaire, suivant une direction transversale correspondant à la hauteur du fuselage (courbure secondaire).

Selon une caractéristique, ladite au moins une déformation géométrique locale se traduit par une diminution du rayon de courbure local d'au moins une zone de la surface considérée.

Au contraire, en l'absence de l'invention, le rayon de courbure local (tout le long de la surface) a une valeur très élevée, voire infinie, lorsque la courbure longitudinale générale de la surface est très faible, voire nulle.

Selon une caractéristique, ladite au moins une déformation géométrique locale a une localisation et une amplitude qui dépendent notamment de paramètres aérodynamiques de l'aéronef.

Ainsi, pour obtenir l'effet recherché sur l'écoulement d'air sur la voilure, il est préférable de tenir compte de ces paramètres pour conformer localement la ou les surfaces concernées du carénage.

Selon une caractéristique, les paramètres aérodynamiques sont ceux relatifs au fuselage, aux ailes, aux nacelles de moteurs et la vitesse de l'aéronef.

Selon une caractéristique, la déformation géométrique locale prend la forme d'une convexité locale, qui permet de créer une onde de détente dans l'écoulement.

Selon une caractéristique, la convexité prend la forme d'une bosse.

Selon une caractéristique, la déformation géométrique locale prend la forme d'une concavité locale, qui permet de créer une onde de compression dans l'écoulement.

Selon une caractéristique, la concavité prend la forme d'un creux.

Selon une caractéristique, le creux est formé par deux portions de surface inclinées qui se rejoignent au fond du creux dans une zone à rupture de pente.

Selon une caractéristique, au moins une des deux surfaces présente plusieurs déformations géométriques locales successives qui s'étendent le long du fuselage, alternant localement convexité et concavité.

En agençant successivement plusieurs convexité et concavité, on réalise ainsi un contrôle fin de l'écoulement sur la voilure qui permet de s'adapter au mieux aux caractéristiques de la voilure et aux contraintes de fabrication.

Selon une caractéristique, ladite au moins une déformation géométrique locale est réalisée sur la surface raccordée à l'extrados de l'aile.

La modification du carénage supérieur est particulièrement adaptée au réglage de la zone supersonique de l'extrados de l'aile.

Selon une caractéristique, ladite au moins une déformation géométrique locale est réalisée sur la surface raccordée à l'intrados de l'aile.

La modification du carénage inférieur est particulièrement adaptée au réglage des gradients de pression sur l'intrados de l'aile.

Selon une caractéristique, le carénage central comporte un assemblage d'une pluralité d'éléments de structure ayant chacun une portion de surface, chacune des surfaces opposées du carénage central en correspondance avec chaque aile étant formée par un ensemble de portions de surface d'éléments de structure agencées les unes à côté des autres.

D'autres caractéristiques et avantages apparaîtront au cours de la description qui va suivre, donnée uniquement à titre limitatif et faite en référence aux dessins annexés, sur lesquels :
- la figure 1 est une vue générale schématique d'un aéronef selon l'invention ;
- la figure 2 est une vue schématique d'un carénage central d'un aéronef ;
- la figure 3 est une vue schématique partielle montrant l'assemblage des éléments de structure constitutifs du carénage ;
- les figures 4a, 4b et 4c illustrent en vue de dessus trois exemples de géométries possibles pour l'intersection fuselage/voilure de l'aéronef de la figure 1 ;
- les figures 5a et 5b illustrent respectivement la répartition des champs de pression sur la voilure sans l'invention et avec l'invention ;
- les figures 6a et 6b son des vues schématiques partielles respectives de dessus et en perspective de l'interface fuselage/voilure sur un aéronef de type A340, sans mise en forme géométrique particulière de cette dernière ;
- les figures 6c et 6d sont des vues schématiques partielles respectives de dessus et en perspective de l'interface des figures 6a et 6b, avec la mise en forme géométrique selon l'invention illustrée sur la figure 4a ;
- les figures 7a et 7b sont des vues schématiques partielles respectives de dessus et en perspective de l'interface fuselage/voilure d'un aéronef de type A380, sans mise en forme géométrique particulière ;
- les figures 7c et 7d sont des vues schématiques partielles respectives de dessus et en perspective de l'interface fuselage/voilure des figures 7a et 7b respectivement, avec une mise en forme géométrique selon l'invention illustrée sur la figure 4b ;
- La figure 7e représente de façon schématique partielle en vue de dessus le profil des éléments de structure constituant le carénage ;
- les figures 8a et 8b sont des vues schématiques partielles respectives de dessus et en perspective d'une interface fuselage/voilure d'un aéronef de type A320, sans mise en forme géométrique particulière ;
- les figures 8c et 8d sont des vues schématiques partielles respectives de dessus et en perspective de l'interface fuselage/voilure des figures 8a et 8b respectivement, avec la mise en forme selon l'invention illustrée sur la figure 4c.

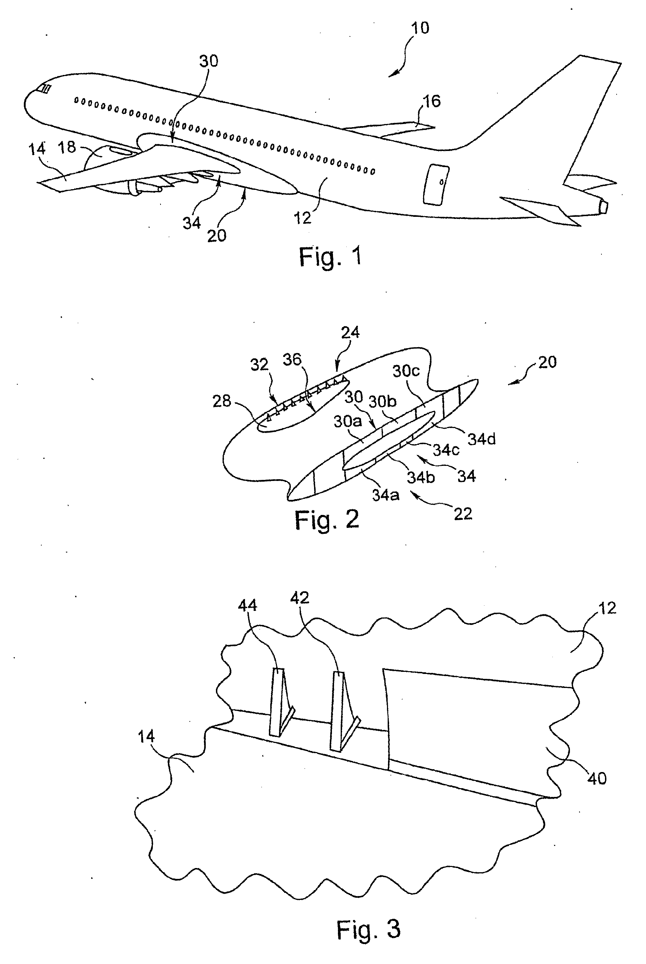

Comme représenté à la **figure 1** et désigné par la référence générale notée 10, un aéronef selon l'invention comprend un fuselage 12 dont la voilure comprend deux ailes latérales 14, 16 qui sont raccordées chacune latéralement au fuselage, de part et d'autre de celui-ci, par une interface fuselage/voilure.

Des nacelles de moteurs sont fixées aux ailes 14, 16 et, par exemple, une nacelle de moteur 18 est assujettie à chaque aile, comme représenté sur la figure 1.

L'interface fuselage/voilure comprend une interface mécanique structurelle (non représentée sur les figures) qui est recouverte par une interface aérodynamique constituée du carénage central 20.

Le carénage central 20 est constitué par un assemblage d'une pluralité d'éléments de structure formant des plaques ou panneaux disposés de façon jointive et rivetés ou boulonnés sur l'interface mécanique structurelle sous-jacente et qui confèrent à l'ensemble une forme de coque (**figure 2**).

Le carénage central des figures 1 et 2 comporte deux parties 22, 24 qui sont respectivement en correspondance avec les ailes 14, 16. Dans la partie gauche 22 et la partie droite 24 sont aménagées respectivement deux ouvertures 26 et 28 pour le raccordement de chacune des deux ailes 14, 16.

Chaque partie du carénage central en correspondance avec une aile comporte deux surfaces opposées, l'une supérieure 30 pour la partie 22, 32 pour la partie 24, et l'autre inférieure 34 pour la partie 22, 36 pour la partie 24, et qui sont raccordées respectivement à l'extrados et à l'intrados de l'aile concernée.

Comme représenté sur la figure 2, les éléments de structure formant le carénage central ont chacun une portion de surface formant une partie d'une surface du carénage. Plus particulièrement, chacune des surfaces opposées supérieure et inférieure de chaque partie 22, 24 du carénage central est formée par un ensemble de portions de surface des éléments de structure précités, ces portions de surface étant agencées les unes à côté des autres de manière à constituer une surface lisse de l'interface aérodynamique.

Ainsi, sur la figure 2, la surface supérieure 30 comporte les éléments de structure jointifs 30a, 30b, 30c, tandis que la surface inférieure 34 comporte les éléments de structure jointifs 34a, 34b, 34c, 34d.

Sur la **figure 3**, on a représenté de façon partielle un élément de structure 40 (panneau) constitutif de la surface supérieure 30 et qui est monté sur le fuselage 12 en correspondance avec l'aile 40. Des supports de fixation en forme d'équerre 42, 44 solidaires du fuselage et en attente de réception d'un autre élément de structure du carénage central sont également représentés. Les supports de fixation sont aussi visibles en figure 2.

La surface supérieure de chaque carénage central, à savoir celle qui est en contact avec l'extrados de la voilure, et la surface inférieure de ce dernier, celle qui est en contact avec l'intrados de la voilure, présentent de façon classique dans l'art antérieur une courbure générale très faible et régulière, voire nulle sur certains aéronefs.

L'invention prévoit de mettre en forme l'une et/ou l'autre de ces surfaces en conférant de façon locale à une ou plusieurs zones de la surface considérée une ou plusieurs déformations géométriques qui s'étendent, par exemple, longitudinalement le long du fuselage.

La ou les déformations géométriques locales de la ou des surfaces sont adaptées à générer des perturbations latérales aérodynamiques qui sont susceptibles de se déplacer en partant du carénage central en direction du bout de l'aile concernée, ceci en vue de contrôler l'écoulement d'air sur l'aile.

L'ajout de formes volumiques latérales sur chaque carénage central, que ce soit par ajout d'éléments de structure conformés sur les éléments de structure existants du carénage central, ou par remplacement de l'un ou plusieurs de ces derniers par des éléments de structure conformés, permet de contrôler l'écoulement d'air sur la voilure, ainsi que de contrôler des interférences qui sont susceptibles de se produire, par exemple, en cas de remotorisation (moteur de plus grande taille, moteur à fort taux de dilution, augmentation de l'autonomie et/ou de la charge utile transportée par l'aéronef).

La modification de la géométrie du carénage central de jonction entre le fuselage et la voilure conforme à l'invention permet d'ajuster la pression de l'air sur la voilure, notamment en améliorant le champ de pression qui se développe sur l'extrados et/ou l'intrados de la voilure selon la partie du carénage concernée par la mise en forme (partie supérieure et/ou inférieure).

Ainsi, la modification de la géométrie locale de l'une ou des deux surfaces opposées de chaque partie 22, 24 du carénage central qui sont raccordées respectivement à l'extrados et à l'intrados de la voilure permet, notamment, d'améliorer l'écoulement d'air sur l'aile en cas de forte interférence entre l'aile, la ou les nacelles de moteurs et le fuselage.

L'invention permet notamment d'améliorer les performances aérodynamiques de l'avion dans différentes conditions de vol (croisière, croisière rapide, début de descente, limite d'enveloppe de vol) et également d'améliorer la flexibilité de l'avion pour des nombres de Mach élevés.

On notera que les éléments formant les surfaces supérieure et inférieure opposées de chaque partie 22, 24 du carénage peuvent être réalisés dans un matériau susceptible d'être déformé en vol par des actionneurs afin d'adapter l'efficacité de l'invention à une large gamme de conditions de vol.

La déformation est alors induite par un déplacement de la surface ou d'une portion de celle-ci.

La ou les déformations géométriques locales apportées aux surfaces du carénage peuvent ainsi être réalisées de façon dynamique et adaptée (en temps réel) en fonction des conditions de vol et de l'effet recherché.

Chaque déformation géométrique locale est caractérisée par sa forme qui sera détaillée ci-dessous, ainsi que par sa localisation sur la surface, le long du fuselage (par exemple, par rapport au bord d'attaque de l'aile) et par son amplitude.

La localisation et l'amplitude des formes géométriques conférées localement à la surface dépendent notamment de paramètres aérodynamiques de l'aéronef.

Ces paramètres sont notamment la vitesse de l'aéronef et les paramètres relatifs au fuselage, à la voilure et aux moteurs.

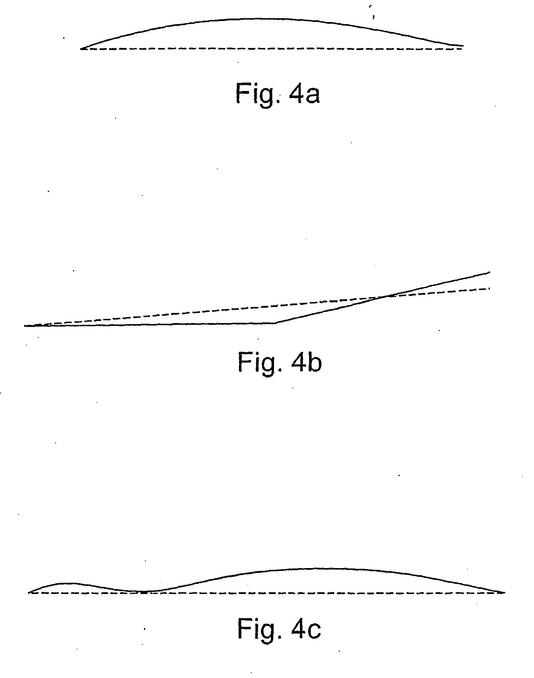

Lorsque l'on regarde en vue de dessus le profil de la surface du carénage central raccordée à l'extrados de l'aile, trois types de formes géométriques sont envisagés comme représenté en trait plein sur les **figures 4a, 4b et 4c****.**

On notera que sur ces figures, l'avant de l'aéronef est situé sur la gauche du dessin, tandis que l'arrière est situé sur la droite.

Les singularités géométriques locales apportées à l'une et/ou à l'autre des deux surfaces opposées du carénage central se traduisent par une diminution du rayon de courbure local de la surface considérée.

Les formes représentées sur les figures 4a-c correspondent aux courbures principales des déformations géométriques envisagées, les courbures secondaires transversales étant agencées perpendiculairement au plan des figures (suivant la hauteur du fuselage) et étant de plus faible ampleur que celle des courbures principales.

La forme géométrique locale illustrée sur la **figure 4a** prend l'allure d'une convexité locale telle qu'une bosse qui s'étend de façon principale longitudinalement le long du fuselage (courbure principale) et, de façon moins prononcée, suivant une direction perpendiculaire au plan de la figure (courbure secondaire).

Une telle mise en forme locale de la surface est apte à créer des perturbations latérales se propageant du carénage central vers le bout de l'aile et qui prennent la forme d'ondes de détente de l'écoulement.

On a également représenté sur la figure 4a en pointillés le profil de la surface du carénage central en vue de dessus en l'absence de l'invention.

Comme représenté sur la **figure 4b****,** une autre forme géométrique possible revêt l'allure d'une concavité locale qui prend, par exemple, la forme d'un creux s'étendant principalement en suivant la direction longitudinale du fuselage (courbure principale) et, de façon secondaire, suivant une direction perpendiculaire au plan de la figure (courbure secondaire).

Une telle déformation géométrique locale est apte à créer des perturbations latérales se propageant du carénage central vers le bout de l'aile et qui prennent la forme d'ondes de compression de l'écoulement initiant un choc faible.

Sur cette figure, on a également représenté en pointillés le profil de la surface du carénage central en vue de dessus en l'absence de l'invention.

Plus particulièrement, le creux est formé par deux portions de surface inclinées qui se rejoignent au fond du creux dans une zone à rupture de pente.

On notera d'ailleurs qu'une telle géométrie a l'allure d'une rampe et que la concavité locale peut comporter ou non une cassure au fond de celle-ci.

Il est en effet possible que le fond du creux ne comporte pas de zone à rupture de pente et soit en forme de cuvette.

La simplicité de la mise en oeuvre industrielle permet de décider s'il est préférable d'avoir une rupture de pente nette (coïncidant, par exemple, à une jointure entre deux panneaux constituant des éléments de structure du carénage), ou s'il est préférable d'insérer un petit rayon de raccord entre les deux zones présentant des pentes différentes pilotées par l'adaptation aérodynamique (par exemple, dans le cas d'un panneau structural unique intégrant les deux zones à pentes différentes).

Sur la **figure 4c**, on a représenté plusieurs déformations géométriques locales successives s'étendant le long du fuselage et qui alternent localement convexité et concavité. Les déformations ont une ampleur moins prononcée dans une direction perpendiculaire au plan de la figure.

Plus particulièrement, la forme géométrique illustrée sur la figure 4c comprend la succession d'une première convexité, d'une concavité et d'une seconde convexité.

De telles modifications géométriques locales de la surface de carénage central sont aptes à créer des perturbations latérales du type ondes de détente ou ondes de compression isentropiques.

On notera que d'une façon générale les déformations géométriques proposées sur les figures 4a-c se traduisent par une forte variation de courbure locale et, plus particulièrement, par une forte diminution du rayon de courbure local (suivant une vue en section longitudinale du carénage) par rapport au rayon de courbure élevé généralement adopté dans l'art antérieur pour les surfaces latérales opposées du carénage.

Par ailleurs, toute autre combinaison de convexité et de concavité est également envisageable en fonction du but poursuivi : une seule convexité suivie d'une concavité, ou l'inverse, deux concavités encadrant une convexité ...

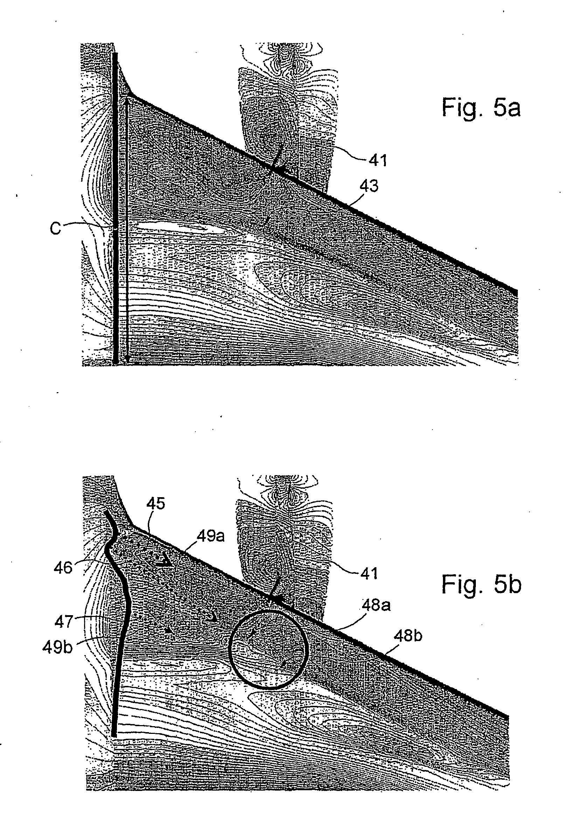

Les figures 5a et 5b illustrent respectivement sur l'extrados d'une aile la répartition des champs de pression délimités par des lignes isobares, sans l'invention et avec l'invention.

On notera que les zones de faible pression sont celles colorées en foncé et celles de forte pression sont colorées en clair.

Ainsi, en l'absence de l'invention, sur la **figure 5a** on observe en vis-à-vis de la nacelle moteur 41 une zone 43 formant un réseau de lignes isobares serrées correspondant à un fort gradient de pression.

Une telle zone est donc le siège de phénomènes de dépression et de compression avec des taux élevés ce qui est pénalisant car générateur de traînée de choc.

Sur la **figure 5b** on a mis en forme de façon spécifique le flanc supérieur du carénage (parties 22 et 24) au moyen de déformations géométriques appropriées du type de celles illustrées sur la figure 4c afin de créer successivement une onde de détente 45, une onde de compression 46 et une onde de détente 47 dans l'écoulement d'air sur la voilure.

Ces ondes de pression (fluctuations de pression et de dépression) se propagent latéralement par rapport à la direction longitudinale du fuselage, du carénage vers l'extrémité de l'aile au sein des zones de vitesse supersonique existant sur l'extrados de la voilure. Ces ondes de pression interagissent avec l'écoulement de la voilure tout d'abord à faible distance du carénage : la première onde de détente 45 et l'onde de compression 46 contribuent à augmenter la pression locale dans la zone 49a jusqu'à obtenir un choc faible et la seconde onde de détente 47 contribue à réduire le gradient de pression dans la zone 49b.

Les phénomènes ayant pris naissance dans les zones 49a et 49b se propagent dans le sens de l'envergure, permettant ainsi de contrôler l'écoulement de la voilure en réorganisant, à distance du carénage, le gradient de pression sur la voilure et notamment dans la zone 43.

On notera qu'en fonction du type de déformations géométriques, de leur nombre, de leur localisation et de leur amplitude, il est possible de générer des ondes de pression adaptées qui vont agir sur la voilure à la distance souhaitée par rapport au carénage, en ajustant le champ de pression (réorganisation des lignes de pression) de façon appropriée par rapport au but recherché.

Plus particulièrement, la réorganisation du champ de pression dans la zone 43 en vis-à-vis de la nacelle moteur se traduit par une dilatation des lignes de pression dans cette zone afin d'y réduire le gradient de pression et par une redistribution spatiale de ces lignes de pression.

Ainsi, deux petits réseaux 48a et 48b de lignes de pression moins serrées qu'auparavant apparaissent dans cette zone et sont le siège de deux petites augmentations de pression successives là où, auparavant, régnait un fort gradient de pression.

Il s'ensuit une diminution de la traînée d'onde de l'aéronef.

On réduit ainsi significativement les perturbations engendrées par l'interaction entre les nacelles de moteurs (en cas de remotorisation) et la surface du carénage central et qui, en l'absence de l'invention, affecteraient le comportement de l'aile dans sa partie supersonique.

On notera que l'allure de la répartition des lignes de pression d'écoulement sur la voilure en l'absence d'invention, ainsi que les contraintes de fabrication et de maintenance, pilotent le choix de la géométrie locale du carénage parmi les différents types illustrés aux figures 4a-c.

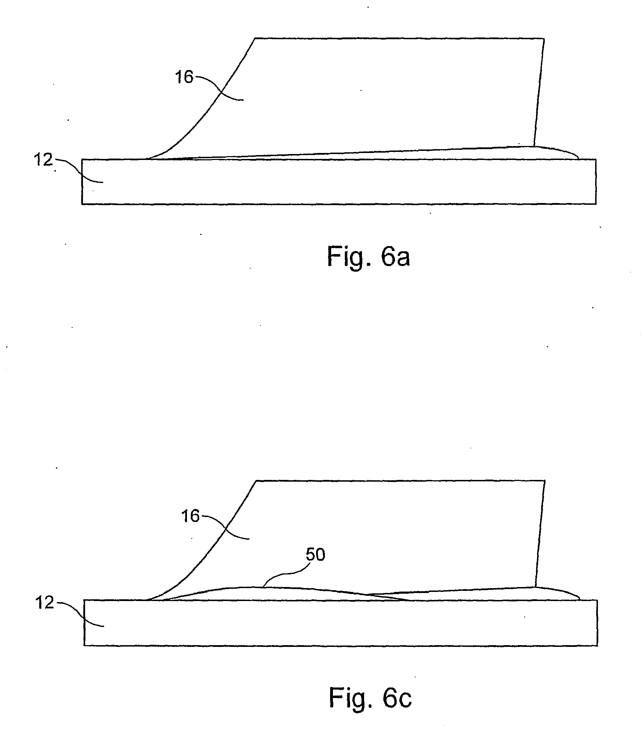

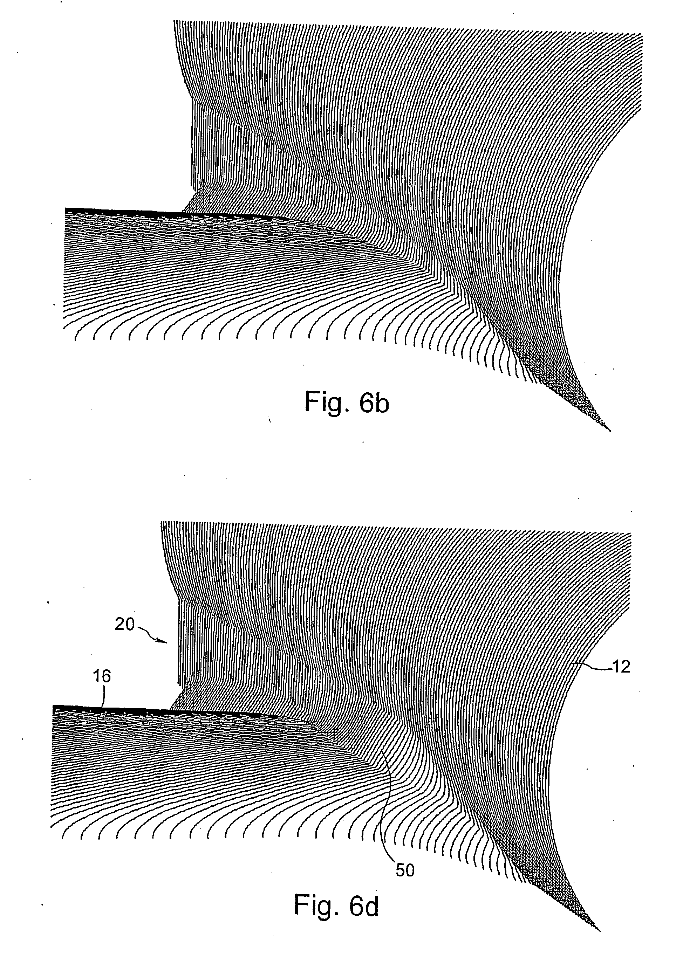

Les **figures 6a** **et** **6b** représentent un aéronef de type A340-500/600 sur lequel aucune mise en forme particulière du profil de la surface du carénage (vu de dessus) n'est effectuée.

La figure 6b illustre, selon une vue en perspective, l'interface fuselage/voilure qui ne révèle aucune courbure particulière.

On notera qu'en cas de remotorisation de l'aéronef avec une telle interface, les recompressions par choc situées sur l'extrados de la voilure s'avèrent violentes et génèrent de la traînée.

Les **figures 6c** **et** **6d** illustrent l'adjonction d'une convexité locale 50 (du type représenté à la figure 4a) à la surface du carénage central dans la partie gauche de la figure, à savoir à proximité du bord d'attaque de la voilure.

Cette convexité locale prend la forme d'une bosse qui s'étend le long du fuselage, comme le montrent les figures, et qui possède également une extension latérale (amplitude) en direction du bout d'aile (figure 6c) et une extension verticale suivant la hauteur du fuselage (figure 6d).

La bosse 50 représentée sur les figures 6c et 6d prend naissance au voisinage du bord d'attaque, se prolonge dans le sens de l'écoulement (en suivant la direction longitudinale du fuselage) et prend fin au voisinage du raccord entre la partie fixe de la voilure et des volets (partie droite de la figure 6c).

On notera que l'amplitude maximale de la bosse est comprise entre 25 % et 35 % de la corde de l'emplanture de l'aile, valeur qui est ajustable en fonction des écoulements d'air sur la voilure.

On notera que la corde de l'emplanture de l'aile est illustrée sur la figure 5a et désignée par la référence "c".

L'extension de la bosse en direction du bout d'aile (amplitude) est par exemple de 600 mm, étant entendu que cette valeur est ajustable en fonction des écoulements d'air sur la voilure.

Cette déformation géométrique locale de la surface du carénage central a été, par exemple, introduite par apport d'éléments de structure (panneaux du type de celui représenté à la figure 3) conformés de manière adaptée et permet d'ajuster la pression d'air sur la voilure en générant des ondes de détente se propageant en direction du bout d'aile. Ces ondes interagissent de façon contrôlée avec les ondes de pression du champ de pression régnant sur la voilure, dans l'espace qui l'environne et qui est perturbé par l'interaction entre les nacelles de moteurs et la voilure.

Cette interaction provoque une modification avantageuse de la topologie du champ de pression et donc un contrôle de cette dernière.

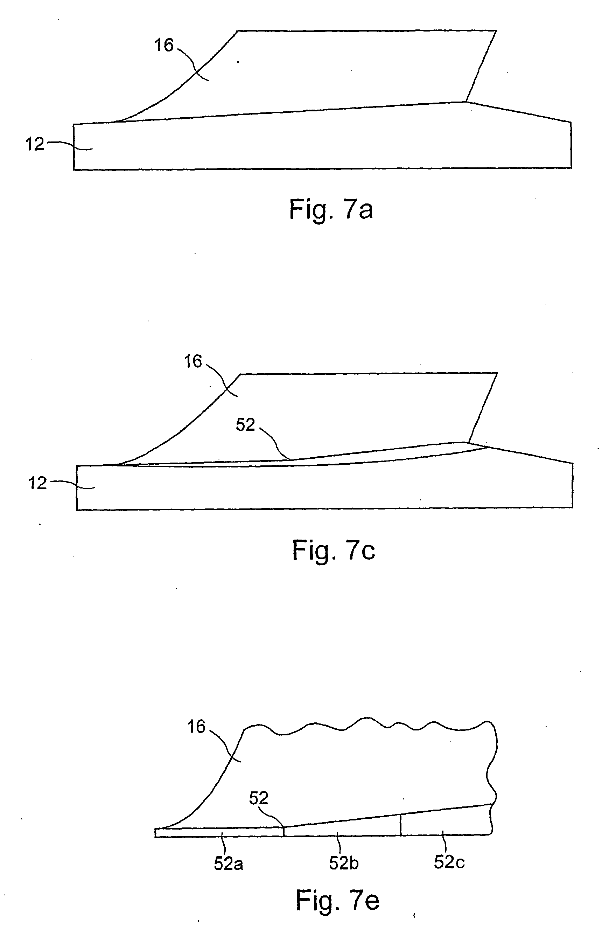

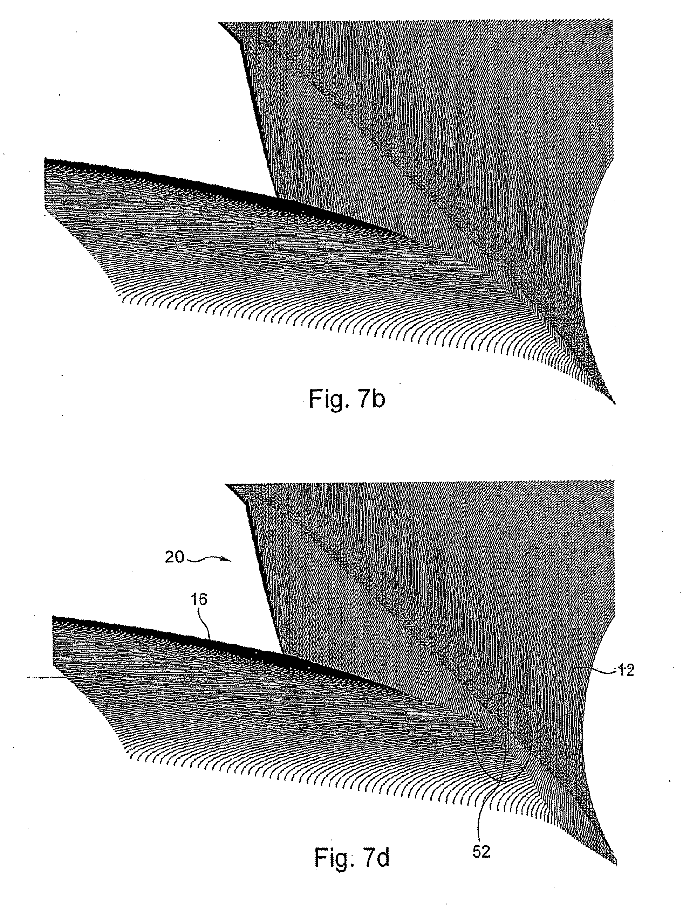

Sur les **figures 7a** **et** **7b****,** on a représenté le carénage central d'un aéronef de type A380, sans mise en forme particulière de sa surface en contact avec l'extrados de l'aile.

On notera qu'en vue de dessus la surface présente une courbure générale très faible, voire nulle.

Comme représenté sur les **figures 7c** **et** **7d****,** la surface du carénage central a été modifiée par l'adjonction d'un système d'ajustement de pression sur la voilure d'un type particulier qui est celui représenté à la figure 4b.

Plusieurs éléments de structure (panneaux de la figure 3) ont été rapportés sur la surface supérieure existante du carénage central représenté à la figure 7a, afin d'introduire localement une concavité 52 dans le profil de cette surface.

On notera que les éléments de structure dont la paroi extérieure comporte une pente ou une portion de pente, voire la concavité toute entière, peuvent également constituer eux-mêmes les éléments de structure constitutifs de la surface supérieure et/ou inférieure de chaque partie du carénage, tels que le panneau de la figure 3.

La concavité 52 se traduit en particulier par un creux avec rupture de pente entre deux portions de surface, la pente de la portion de surface placée du côté du bord d'attaque formant, par exemple, un angle de 0°, tandis que la pente de la portion de surface située du côté du bord de fuite forme, par exemple, un angle de 5°.

Le creux défini par la rupture de pente nette de plusieurs degrés est disposé longitudinalement le long du fuselage, en partant du bord d'attaque, à une distance située entre 20 % et 35 % de la corde de l'emplanture de l'aile.

On notera que cette valeur, ainsi que les valeurs des pentes des deux surfaces formant la concavité, sont ajustables en fonction de la vitesse locale de l'écoulement sur la voilure.

On a représenté sur la **figure 7e** (vue en section longitudinale du carénage) trois panneaux structuraux 52a-c agencés de manière fixe côte à côte le long du fuselage afin de conférer à la surface supérieure du carénage central le profil souhaité (creux 52 avec rupture de pente). Sans cette configuration, le creux est formé à la limite entre les deux panneaux adjacents 52a et 52b.

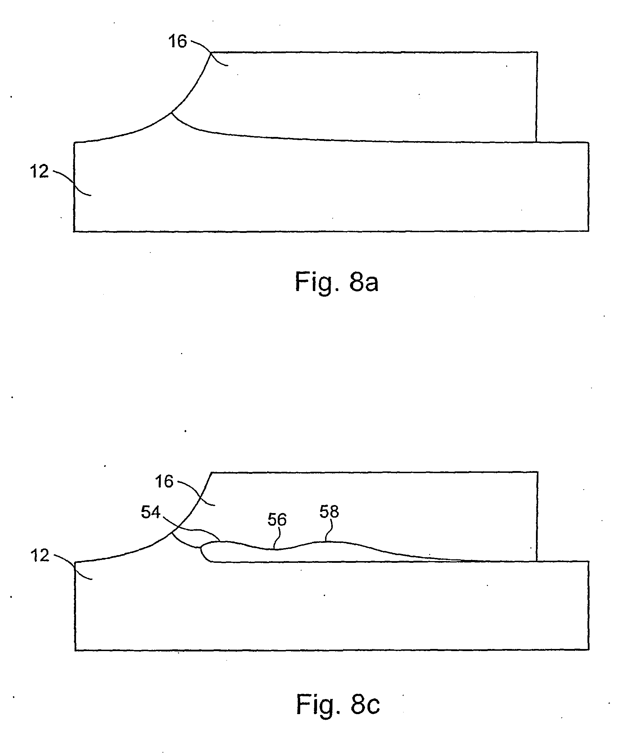

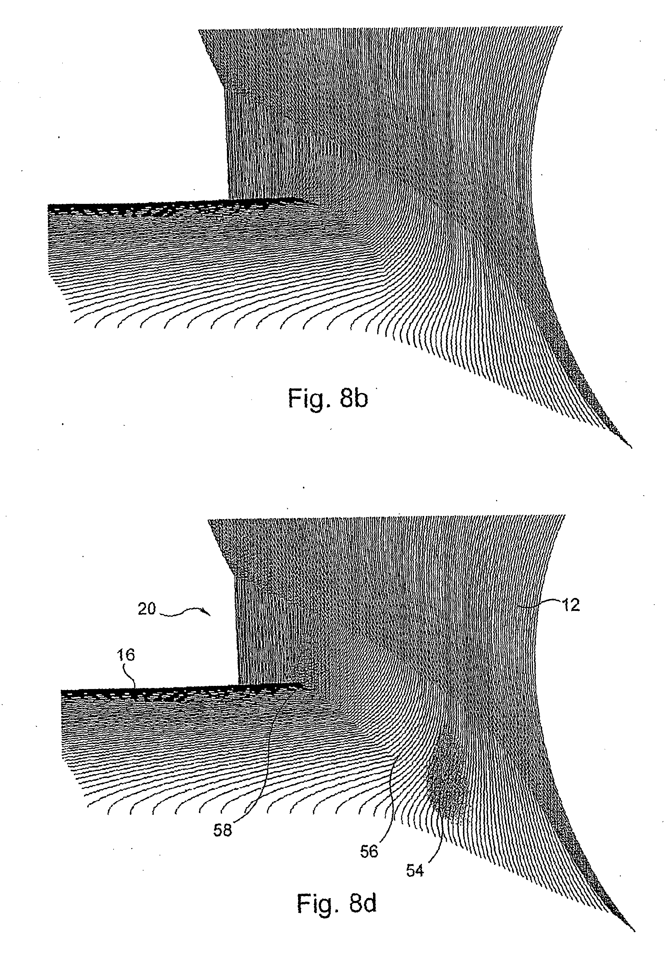

Comme représenté sur **les** **figures 8a** **et** **8b****,** un carénage central d'un aéronef de type A320 ne comporte pas de mise en forme particulière de sa surface reliée à l'extrados de la voilure.

On notera également que cette surface présente une courbure générale très faible et régulière, voire nulle.

Le système d'ajustement de pression d'air sur la voilure selon l'invention prévoit d'aménager sur la surface supérieure du carénage central une alternance de convexités et de concavités locales, par exemple, une succession constituée d'une première bosse 54, d'un creux 56 et d'une seconde bosse 58 telle que représentée sur la figure 4c.

La première bosse 54 prend naissance au voisinage du bord d'attaque et la deuxième 58 se termine en suivant le sens de l'écoulement (suivant une direction longitudinale s'étendant le long du fuselage) au voisinage du raccord entre la partie fixe de la voilure et les volets.

Plus particulièrement, la première bosse 54 a un maximum d'amplitude situé entre 5 % et 10 % de la corde de l'emplanture en partant du bord d'attaque, tandis que la deuxième bosse 58 possède un maximum d'amplitude situé entre 20 % et 30 % de la corde de l'emplanture.

Ces deux bosses 54 et 58 sont séparées par un creux 56 sans rupture de pente dans cet exemple. Le creux est agencé à une distance située entre 10 % et 20 % de la corde de l'emplanture de l'aile en partant du bord d'attaque.

On notera que l'ordre de grandeur de l'extension latérale (amplitude) des bosses en direction du bout d'aile est, par exemple, de 100 mm pour la première bosse 54 et de 400 mm pour la deuxième bosse 58.

Par ailleurs, les valeurs concernant la localisation des bosses et du creux, ainsi que leur extension en direction du bout d'aile sont ajustables en fonction des écoulements d'air sur la voilure et, notamment, de la vitesse locale de l'écoulement d'air sur cette dernière et des contraintes locales de fabrication et de maintenance.

L'invention permet, sans remettre en cause la conception de la voilure, d'agir à distance sur l'écoulement supersonique de cette dernière en introduisant localement une ou plusieurs déformations géométriques locales de la ou des surfaces régulières de chaque carénage central respectivement en contact avec l'extrados et l'intrados de l'aile concernée.

## Revendications

1. Aéronef (10) comprenant :
- un fuselage (12),
- deux ailes (14, 16) auxquelles sont fixées des nacelles de moteurs et qui sont raccordées chacune latéralement au fuselage, de part et d'autre de celui-ci, par un carénage central, le carénage central (18, 20) comportant, en correspondance avec chaque aile, deux surfaces opposées raccordées respectivement à l'extrados et à l'intrados de l'aile concernée et qui s'étendent longitudinalement le long du fuselage,
**caractérisé en ce qu'**au moins une des deux surfaces présente au moins une déformation géométrique locale (50 ; 52 ; 54, 56, 58) qui est adaptée à générer des perturbations latérales aérodynamiques du carénage central vers l'aile en vue de contrôler l'écoulement d'air sur l'aile.

2. Aéronef selon la revendication 1, **caractérisé en ce que** ladite au moins une déformation géométrique locale comprend une courbure principale qui s'étend longitudinalement le long du fuselage et une courbure secondaire qui s'étend transversalement suivant la hauteur du fuselage.

3. Aéronef selon la revendication 1 ou 2, **caractérisé en ce que** ladite au moins une déformation géométrique locale se traduit par une diminution du rayon de courbure local d'au moins une zone de la surface considérée.

4. Aéronef selon la revendication 1 à 3, **caractérisé en ce que** ladite au moins une déformation géométrique locale a une localisation et une amplitude qui dépendent notamment de paramètres aérodynamiques de l'aéronef.

5. Aéronef selon la revendication 4, **caractérisé en ce que** les paramètres aérodynamiques sont ceux relatifs au fuselage, aux ailes, aux nacelles de moteurs et la vitesse de l'aéronef.

6. Aéronef selon l'une des revendications 1 à 5, **caractérisé en ce que** la déformation géométrique locale prend la forme d'une convexité locale (50).

7. Aéronef selon l'une des revendications 1 à 5, **caractérisé en ce que** la déformation géométrique locale prend la forme d'une concavité locale (52).

8. Aéronef selon l'une des revendications 1 à 7, **caractérisé en ce qu'**au moins une des deux surfaces présente plusieurs déformations géométriques locales successives (54, 56, 58) qui s'étendent le long du fuselage, alternant localement convexité et concavité.

9. Aéronef selon l'une des revendications 1 à 8, **caractérisé en ce que** ladite au moins une déformation géométrique locale est réalisée sur la surface raccordée à l'extrados de l'aile.

10. Aéronef selon l'une des revendications 1 à 9, **caractérisé en ce que** ladite au moins une déformation géométrique locale est réalisée sur la surface raccordée à l'intrados de l'aile.

## Claims

1. An aircraft (10) comprising:
- a fuselage (12),
- two wings (14, 16) to which are attached engine nacelles and which are each laterally connected to the fuselage respectively on the two sides thereof, by a central fairing, the central fairing (18, 20) comprising, corresponding with each wing, two opposite surfaces respectively connected to the extrados and to the intrados of the wing concerned and which extend longitudinally along the fuselage,
**characterized in that** at least one of the two surfaces has at least one local geometric deformation (50 ; 52 ; 54, 56, 58) which is adapted to generate lateral aerodynamic disturbances from the central fairing towards the wing for controlling the airflow on the wing.

2. An aircraft according to claim 1, **characterized in that** said at least one local geometric deformation comprises a main curvature which extends longitudinally along the fuselage and a secondary curvature which extends transversely in the heightwise direction of the fuselage.

3. An aircraft according to claim 1 or 2, **characterized in that** said at least one local geometric deformation results in a reduction in the local radius of curvature of at least one zone of the surface considered.

4. An aircraft according to claim 1 to 3, **characterized in that** said at least one local geometric deformation has a location and amplitude that depend in particular on aerodynamic parameters of the aircraft.

5. An aircraft according to claim 4, **characterized in that** the aerodynamic parameters are those relative to the fuselage, to the wings, to the engine nacelles and to the speed of the aircraft.

6. An aircraft according to one of claims 1 to 5, **characterized in that** the local geometric deformation takes the form of a local convexity (50).

7. An aircraft according to one of claims 1 to 5, **characterized in that** the local geometric deformation takes the form of a local concavity (52).

8. An aircraft according to one of claims 1 to 7, **characterized in that** at least one of the two surfaces presents several successive local geometric deformations (54, 56, 58) which extend along the fuselage, alternating locally between convexity and concavity.

9. An aircraft according to one of claims 1 to 8, **characterized in that** said at least one local geometric deformation is formed on the surface connected to the extrados of the wing.

10. An aircraft according to one of claims 1 to 9, **characterized in that** said at least one local geometric deformation is formed on the surface connected to the intrados of the wing.

## Patentansprüche

1. Flugzeug (10) mit
- einem Rumpf (12),
- zwei Flügeln (14, 16), an welchen Triebwerksgondeln befestigt sind und die jeweils seitlich auf der einen und anderen Seite des Rumpfes mit diesem über eine zentrale Verkleidung verbunden sind, wobei die zentrale Verkleidung (18, 20) in Entsprechung zu jedem Flügel zwei entgegengesetzte Flächen aufweist, die sich an die Saugseite bzw. Unterseite des betreffenden Flügels anschließen und längs am Rumpf erstrecken,
**dadurch gekennzeichnet, dass** mindestens eine der beiden Flächen mindestens eine lokale geometrische Verformung (50; 52; 54; 56, 58) aufweist, die so ausgebildet ist, dass sie aerodynamische seitliche Störungen der zentralen Verkleidung zum Flügel erzeugt, um die Luftströmung am Flügel zu kontrollieren.

2. Flugzeug nach Anspruch 1, **dadurch gekennzeichnet, dass** die mindestens eine lokale geometrische Verformung eine Hauptkrümmung, die sich entlang des Rumpfes längs erstreckt, und eine Nebenkrümmung, die sich entlang der Höhe des Rumpfes quer erstreckt, aufweist.

3. Flugzeug nach Anspruch 1 oder 2, **dadurch gekennzeichnet, dass** sich die lokale geometrische Verformung durch eine Verringerung des lokalen Krümmungsradius mindestens eines Bereichs der in Betracht gezogenen Fläche auswirkt.

4. Flugzeug nach einem der Ansprüche 1 bis 3, **dadurch gekennzeichnet, dass** die lokale geometrische Verformung eine Lokalisierung und Amplitude hat, die insbesondere von aerodynamischen Parametern des Flugzeugs abhängig sind.

5. Flugzeug nach Anspruch 4, **dadurch gekennzeichnet, dass** die aerodynamischen Parameter diejenigen sind, die den Rumpf, die Flügel, die Triebwerksgondeln und die Geschwindigkeit des Flugzeugs betreffen.

6. Flugzeug nach einem der Ansprüche 1 bis 5, **dadurch gekennzeichnet, dass** die lokale geometrische Verformung die Form einer lokalen Konvexität (50) annimmt.

7. Flugzeug nach einem der Ansprüche 1 bis 5, **dadurch gekennzeichnet, dass** die lokale geometrische Verformung die Form einer lokalen Konkavität (52) annimmt.

8. Flugzeug nach einem der Ansprüche 1 bis 7, **dadurch gekennzeichnet, dass** mindestens eine der beiden Flächen mehrere aufeinander folgende lokale geometrische Verformungen (54, 56, 68) aufweist, die sich entlang des Rumpfes erstrecken, wobei sich lokal Konvexität und Konkavität abwechseln.

9. Flugzeug nach einem der Ansprüche 1 bis 8, **dadurch gekennzeichnet, dass** mindestens eine lokale geometrische Verformung an der sich an die Saugseite des Flügels anschließenden Fläche ausgebildet ist.

10. Flugzeug nach einem der Ansprüche 1 bis 9, **dadurch gekennzeichnet, dass** mindestens eine lokale geometrische Verformung an der sich an die Unterseite des Flügels anschließenden Fläche ausgebildet ist.
